(19) Europäisches Patentamt
European Patent Office
Office européen des brevets

(11) **EP 3 373 233 A1**

(12) **EUROPEAN PATENT APPLICATION**

(43) Date of publication:
**12.09.2018 Bulletin 2018/37**

(51) Int Cl.:
**G06Q 50/06** (2012.01)  **G06Q 10/00** (2012.01)
*F01K 13/00* (2006.01)  *F02C 6/18* (2006.01)
*F01K 23/10* (2006.01)  *F03D 80/50* (2016.01)

(21) Application number: **18157023.5**

(22) Date of filing: **15.02.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **06.03.2017  US 201715450830**

(71) Applicant: **General Electric Company**
**Schenectady, NY 12345 (US)**

(72) Inventors:
• **EWENS, David, Spencer**
  **Greenville, SC 29615 (US)**
• **RAFFENSPERGER, John Joseph**
  **Greenville, SC 29615 (US)**
• **SEELY, William Forrester**
  **Greenville, SC 29615 (US)**

(74) Representative: **Fischer, Michael Maria**
**General Electric Technology GmbH**
**Global Patent Operation - Europe**
**Brown Boveri Strasse 7**
**5400 Baden (CH)**

(54) **SCHEDULING MAINTENANCE TO REDUCE DEGRADATION OF A POWER GENERATION SYSTEM**

(57)     A system includes a power generation system (10) and controllers (18) that control operations of the power generation system (10). The controllers (18) include processors (19) that receive multiple values associated with operating parameters (72) of the power generation system (10), and determine a degradation cost function (92) that quantifies a degradation cost based on the values. The processors (19) further receive an operation cost that includes a fixed financial cost of performing an operation on the power generation system (10), and determine an operation cost function that quantifies the operation cost. The processors (19) further determine a total cost function of the power generation system (10) based on the degradation cost function (92) and the operation cost function, and determine times (98) to perform the operation on the power generation system (10) based on the total cost function. The processors (19) further send an alert to perform the operation of the power generation system (10) at the times.

FIG. 1

**Description**

BACKGROUND

The present disclosure relates generally to power generation systems. In particular, the present disclosure relates to scheduling maintenance operations of a power generation system to reduce degradation of the power generation system.

Degradation of a power generation system (e.g., a gas turbine system) occurs when one or more operating parameters of the power generation system degrades over time. For example, the compressor of the power generation system may degrade (e.g., decrease) under the same or similar operating and ambient conditions over a period of time (e.g., months, years, and the like) of operating the power generation system. This may be because components of the power generation system may degrade or otherwise change from use and time. For example, the compressor may collect deposits, erode, break down, and the like.

Degradation may be reduced or recovered from by performing maintenance operations on the power generation system. For example, components may be cleaned, flushed, refurbished, replaced, and the like. However, performing a maintenance operation may involve shutting down the power generation system and ceasing production by the power generation system. As such, costs (e.g., from lost profits, lost opportunities, maintenance materials, labor costs, component replacement, restart fuel, and the like) that result from shutting down the power generation system may begin accruing and increasing while the power generation system is shutdown. At the same time, operating the power generation system when it is in a degraded condition accrues its own costs due to less efficient power production. In some cases, if a maintenance operation is not performed at an appropriate time, excessive costs resulting from reduced power production and/or conversion efficiency due to operation of an excessively degraded power generation system may be realized. Similarly, if the maintenance operation is performed too soon or before the costs of operating the power generation system at reduced power output and/or efficiency is greater than some threshold, excessive costs resulting from performing a largely superfluous maintenance operation on an insufficiently degraded power generation system may be realized as compared to performing the maintenance operation at a later time (e.g., when the power generation system is more degraded).

BRIEF DESCRIPTION

Certain embodiments commensurate in scope with the original claims are summarized below. These embodiments are not intended to limit the scope of the claimed embodiments, but rather these embodiments are intended only to provide a brief summary of possible forms of the systems and techniques disclosed herein. Indeed, the presently claimed embodiments may encompass a variety of forms that may be similar to or different from the embodiments set forth below.

In one embodiment, a system includes a power generation system. The system also includes controllers that control operations of the power generation system. The controllers include processors that receive multiple values associated with operating parameters of the power generation system from sensors disposed within the power generation system. The processors also determine a degradation cost function that quantifies a degradation cost of the power generation system over an operating time of the power generation system based on the values. The processors further receive an operation cost of the power generation system that includes a fixed financial cost of performing an operation on the power generation system. The processors also determine an operation cost function that quantifies the operation cost in relation to the operating time of the power generation system. The processors further determine a total cost function of the power generation system over the operating time of the power generation system based on the degradation cost function and the operation cost function. The processors also determine times to perform the operation on the power generation system based on the total cost function. The processors further send an alert to perform the operation of the power generation system at the times.

In another embodiment, a method includes receiving, via processors, multiple values associated with operating parameters of a power generation system from sensors disposed within the power generation system. The method also includes determining, via the processors, a degradation cost function that quantifies a degradation cost of the power generation system over an operating time of the power generation system based on the values. The method further includes receiving, via the processors, an operation cost of the power generation system that includes a fixed financial cost of performing an operation on the power generation system. The method also includes determining, via the processors, an operation cost function that quantifies the operation cost in relation to the operating time of the power generation system. The method further includes determining, via the processors, a total cost function of the power generation system over the operating time of the power generation system based on the degradation cost function and the operation cost function. The method also includes determining, via the processors, times to perform the operation on the power generation system based on the total cost function. The method further includes scheduling, via the processors, the operation of the power generation system at the times.

In yet another embodiment, a tangible, non-transitory, machine-readable-medium, includes machine-readable instructions to cause processors to receive multiple values associated with operating parameters associated with a power generation system from sensors disposed within the power generation system. The machine-readable instructions also cause the processors to determine a degradation cost function that quantifies a degradation cost of the power generation system over an operating time of the power generation system based on the values. The machine-readable instructions further cause the processors to receive an operation cost of the power generation system that includes a fixed financial cost of performing an operation on the power generation system. The machine-readable instructions also cause the processors to determine an operation cost function that quantifies the operation cost in relation to the operating time of the power generation system over the operating time of the power generation system. The machine-readable instructions further cause the processors to determine a total cost function of the power generation system over the operating time of the power generation system based on the degradation cost function and the operation cost function. The machine-readable instructions also cause the processors to determine times to perform the operation on the power generation system based on the total cost function. The machine-readable instructions further cause the processors to send an instruction to perform the operation of the power generation system at the times.

BRIEF DESCRIPTION OF THE DRAWINGS

These and other features, aspects, and advantages of the presently disclosed techniques will become better understood when the following detailed description is read with reference to the accompanying drawings in which like characters represent like parts throughout the drawings, wherein:

FIG. 1 is a block diagram of a gas turbine system, in accordance with an embodiment of the present disclosure;

FIG. 2 is a flow diagram of a method for scheduling maintenance operations of the gas turbine system of FIG. 1 to reduce degradation of the gas turbine system, in accordance with an embodiment of the present disclosure;

FIG. 3 is a block diagram of an example model for simulating operation of the gas turbine system of FIG. 1, in accordance with an embodiment of the present disclosure; and

FIG. 4 is graph of example degradation and washing costs of the gas turbine system of FIG. 1 over time, in accordance with an embodiment of the present disclosure.

DETAILED DESCRIPTION

One or more specific embodiments of the presently disclosed embodiments will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the presently disclosed embodiments, the articles "a," "an," "the," and "said" are intended to mean that there are one or more of the elements. The terms "comprising," "including," and "having" are intended to be inclusive and mean that there may be additional elements other than the listed elements.

Degradation of a power generation system (e.g., a gas turbine system) may be assessed and estimated via modeling. The estimated degradation of the power generation system may be combined with economical and operational (e.g., cost) data of the power generation system to determine times to schedule and perform maintenance of the power generation system. As such, costs from operating a degraded power generation system may be balanced with costs of performing a maintenance operation that reduces degradation of the power generation system, thereby reducing a total cost to an operator of the power generation system.

In one embodiment, controllers of a power generation system may determine a degradation cost function that quantifies a degradation cost of the power generation system over time. The controllers may also determine a maintenance operation cost function that quantifies the maintenance operation cost of the power generation system based on a total operating time of the power generation system over time. The controllers may then determine a total cost function of the power generation system over time based on the degradation cost function and the maintenance operation cost function. The controllers may then schedule a maintenance operation of the power generation system based on the total cost function. In this manner, costs from operating a degraded power generation system may be balanced with costs of performing the maintenance operation that reduces degradation of the power generation system, reducing a total cost to an operator of the power generation system.

While the present disclosure discusses embodiments associated with a gas turbine system, it should be understood that the systems and methods described in the present disclosure may apply to any suitable power generation system, such as a steam turbine system, wind turbine system, hydroturbine system, combustion engine, hydraulic engine, electric generator, and the like.

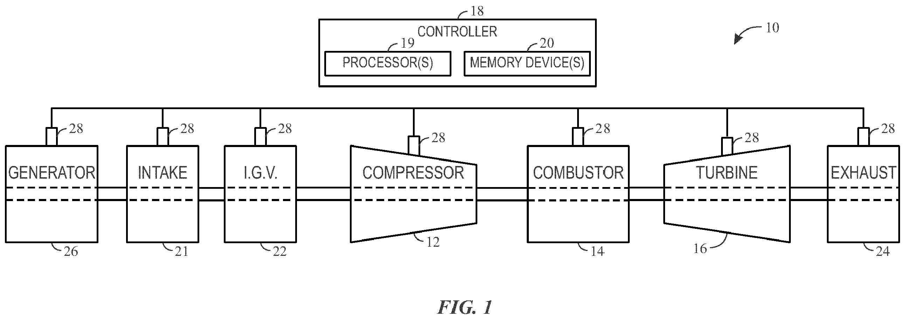

FIG. 1 is a block diagram of a power generation system (e.g., a gas turbine system) 10 having a compressor 12, combustor 14, turbine 16, and a controller 18, in accordance with an embodiment of the present disclosure. An intake duct 21 may feed ambient air to the compressor 12. The intake 21 may include ducts, filters, screens, and/or sound-absorbing devices that contribute to pressure loss of the ambient air flowing through the intake 21 into inlet guide vanes 22. An exhaust duct 24 may include sound-absorbing materials and emission control devices that apply a backpressure to the turbine 16. The amount of intake pressure loss and back pressure may vary over time due to the addition of components to and dust and dirt clogging the intake duct 21 and the exhaust duct 24. The turbine 16 may drive a generator 26 that produces electrical power.

The operation of the gas turbine system 10 may be monitored by one or more sensors 28 that may detect various observable conditions of one or more components of the gas turbine system 10 (e.g., the generator 26, the intake 21, etc.) and/or the ambient environment. In some embodiments, multiple redundant sensors may measure the same measured condition. For example, multiple redundant temperature sensors 28 may monitor ambient temperature surrounding the gas turbine system 10, compressor discharge temperature, turbine exhaust gas temperature, and other temperature measurements of the gas stream through the gas turbine system 10. Similarly, multiple redundant pressure sensors 28 may monitor ambient pressure, and static and dynamic pressure levels at the intake duct 21, exhaust duct 24, and/or at other locations in the gas stream through the gas turbine system 10. Multiple redundant humidity sensors 28 (e.g., wet and/or dry bulb thermometers) may measure ambient humidity in the intake duct 21. The redundant sensors 28 may also include flow sensors, speed sensors, flame detector sensors, valve position sensors, guide vane angle sensors, or the like, that sense various parameters pertinent to the operation of gas turbine system 10.

As used herein, a "parameter" refers to a measurable and/or estimable quality that can be used to define an operating condition of the gas turbine system 10, such as temperature, pressure, gas flow, or the like, at defined locations in the gas turbine system 10. Some parameters are measured (i.e., sensed) and are directly known. Other parameters are estimated by a model and are indirectly known. The measured and estimated parameters may be used to represent a given turbine operating state.

The controller 18 may include one or more computer systems and/or platforms having one or more processors 19 (e.g., a microprocessor(s)) that may execute software programs to control the operation of the gas turbine system 10 using sensor inputs and instructions from human operators. Moreover, the processor(s) 19 may include multiple microprocessors, one or more "general-purpose" microprocessors, one or more special-purpose microprocessors, and/or one or more application specific integrated circuits (ASICS), or some combination thereof. For example, the processor(s) 19 may include one or more reduced instruction set (RISC) processors. The controller 18 may couple to one or more memory devices 20 that may store information such as control software, look up tables, configuration data, etc. In some embodiments, the processor(s) 19 and/or the memory device(s) 20 may be external to the controller 18. The memory device(s) 20 may include a tangible, non-transitory, machine-readable-medium, such as a volatile memory (e.g., a random access memory (RAM)) and/or a nonvolatile memory (e.g., a read-only memory (ROM), flash memory, a hard drive, or any other suitable optical, magnetic, or solid-state storage medium, or a combination thereof). The memory device(s) 20 may store a variety of information and may be used for various purposes. For example, the memory device(s) 20 may store machine-readable and/or processor-executable instructions (e.g., firmware or software) for the processor(s) 19 to execute, such as instructions for scheduling maintenance of the gas turbine system 10.

While the present disclosure refers to a single controller 18, it should be understood that the controller 18 may include multiple controllers, computer systems, and/or computer platforms. For example, a first controller may control the gas turbine 16 (e.g., performing control functions including collecting sensor information), while a second controller may be a separate computer platform from the first controller and perform data analysis associated with the gas turbine 16 (e.g., characterizing degradation, performing the economic analysis, gathering user inputs on costs, providing analysis results, and the like). In such an example, the second controller may communicate with the first controller to receive the sensor information. Both the first controller and the second controller may be collectively referred to as the single controller 18 in the present disclosure.

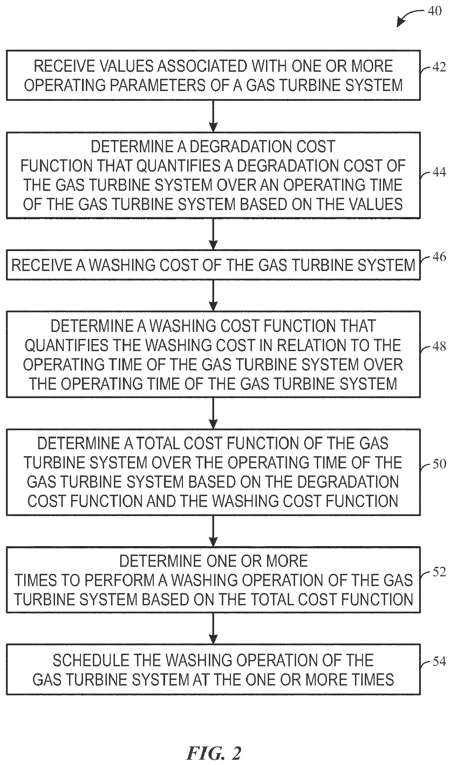

FIG. 2 is a flow diagram of a method 40 for scheduling maintenance operations of the gas turbine system 10 of FIG. 1 to reduce degradation of the gas turbine system 10, in accordance with an embodiment of the present disclosure. The method 40 may be performed by any suitable device that may control components of the gas turbine system 10, such as the controller 18. While the method 40 is described using steps in a specific sequence, it should be understood that the present disclosure contemplates that the described steps may be performed in different sequences than the sequence illustrated, and certain described steps may be skipped or not performed altogether. In some embodiments, the method 40 may be implemented by executing instructions stored in a tangible, non-transitory, computer-readable medium, such as the memory device(s) 20, using a processor, such as the processor(s) 19.

The controller 18 may receive (process block 42) values associated with one or more operating parameters of the gas turbine system 10 over time (e.g., over an operating time of the gas turbine system 10). The one or more operating parameters may include, but are not limited to, compressor inlet airflow, fuel flow, rotational speed, generator or power output, exhaust temperature (e.g., turbine exhaust temperature), compressor condition (e.g., compressor pressure ratio), and the like. The values may be provided by one or more sensors of the gas turbine system 10.

The controller 18 may then determine (process block 44) a degradation cost function that quantifies a degradation cost of the gas turbine system 10 over an operating time of the gas turbine system 10 based on the values. The degradation cost is a cost of decreased power production and/or efficiency of the gas turbine system 10 resulting from degrading operating parameters of the gas turbine system 10, including the one or more operating parameters referred to in process block 42.

That is, the controller 18 may generate or use a model of the gas turbine system 10 to model flow and/or efficiency of the compressor 12 (e.g., compressor flow and/or efficiency loss) of the gas turbine system 10. For example, the controller 18 may receive discharge pressure and/or temperature measurements of the compressor 12 using sensors 28. The controller 18 may also use the model to generate corresponding modeled discharge pressure and/or temperature of the compressor 12. The controller 18 may adjust the modeled compressor flow and/or efficiency (via multipliers applied to the modeled compressor flow and/or efficiency) such that modeled discharge pressure and/or temperature output by the model approximately match the measured discharge pressure and/or temperature.

Additionally, the controller 18 may track historical data or values of the compressor flow and/or efficiency loss over time, and generate a transfer function to correlate the compressor flow and/or efficiency loss to operational time (and potentially other operational and/or ambient factors). The transfer function may be a linear, quadratic, or other fit function, based on the historical data. Using the transfer function, the controller 18 may estimate, predict, forecast, or otherwise determine compressor flow and/or efficiency loss at any point in time. The controller 18 may also use the gas turbine model to predict power production and/or efficiency loss (e.g., the degradation cost function) of the gas turbine system 10 as the result of the compressor flow and/or efficiency loss. Factoring in market prices for electricity and fuel, the power and efficiency loss (e.g., the degradation) of the gas turbine system 10 may be computed into financial cost terms. For example, a net profit from operating the gas turbine system 10 may be a difference between a gross profit from operating the gas turbine system 10 and an operational cost of operating the gas turbine system 10. The gross profit may be a product of power production of the gas turbine system 10 and an electricity market price. The operational cost may be a product of a fuel consumption of the gas turbine system 10 and a fuel market price. Using these financial relationships, an economic impact of the power production and/or efficiency loss of the gas turbine system 10 is financially quantifiable. Integration of the degradation cost function over time may then be divided by a total operating time to determine an average degradation cost of a given time period.

For example, compressor may degrade (e.g., decrease) under the same or similar operating and ambient conditions over a period of time (e.g., months, years, and the like) due to normal wear. This may be because components of the gas turbine system 10 may degrade or otherwise change from use and time. For example, the compressor of the power generation system may change, collect deposits, erode, and the like.

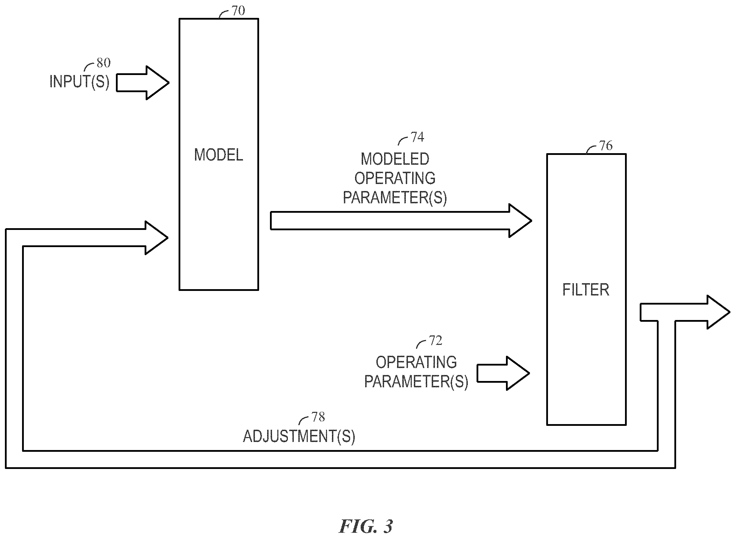

The controller 18 may determine the degradation cost function by determining degradation of the one or more operating parameters over the operating time of the gas turbine system 10. For example, the controller 18 may generate a model of the gas turbine system 10. The model may simulate the one or more operating parameters of the gas turbine system 10. The model may also include one or more inputs corresponding to one or more inputs to the gas turbine system 10. The input(s) to the gas turbine system 10 may include, for example, and without limitation, fuel flow rate, ambient conditions, angle of the inlet guide vanes 22, amount of fuel flowing to the combustion system 14, rotational speed of the gas turbine system 10, and the like. By way of example, FIG. 3 is a block diagram of an example model 70 for simulating operation of the gas turbine system 10 of FIG. 1, in accordance with an embodiment of the present disclosure. The model 70 may be a physics-based software model, and more particularly an adaptive real-time engine simulation (ARES) model. In one embodiment, the model 70 simulates the one or more operating parameters 72 of the gas turbine system 10 as the one or more modeled operating parameters 74.

The controller 18 may input values associated with the operating parameter(s) 72 and values associated with the modeled operating parameter(s) 74 to an error correction system or filter 76 (e.g., a Kalman filter gain matrix) that automatically and regularly adjusts or tunes the model 70 (e.g., by tuning the input(s) 80 to the model 70) to more accurately fit the values associated with the modeled operating parameter(s) 74 to the values associated with the operating parameter(s) 72. In some embodiments, the filter 76 may use partial derivative analysis and/or normalization to determine a matrix of tuning or gain values to be applied to the values associated with the modeled operating parameter(s) 74. For each set of values, the filter 76 may generate one or more adjustments 78 based on a difference between a respective value of the modeled operating parameter(s) 74 and a respective value of the operating parameter(s) 72.

The one or more adjustments 78 may be applied to the model 70 such that the values associated with the modeled operating parameter(s) 74 approximately matches the values associated with the operating parameter(s) 72.

The resulting set of adjustments 78 may be used to determine an amount or quantify the degradation of the gas turbine system 10. For example, as the gas turbine system 10 degrades through use over time, adjustments 78 related to tuning values associated with a modeled compressor inlet airflow may increase to cause the values associated with the modeled compressor inlet airflow to match corresponding sensed or measured values associated with a compressor inlet airflow of the gas turbine system 10. The adjustments 78 may be used to generate a degradation function that may estimate degradation of the gas turbine system 10 at future times. For example, the controller 18, the model 70, and/or the filter 76 may determine the degradation function based on the adjustments 78. The controller 18 may then determine the degradation cost function by basing the degradation function on gas turbine operational time. For example, the degradation function may be divided by gas turbine operational time to realize the degradation cost function.

The following equation may express the degradation cost function (e.g., an amortized degradation cost function):

$$\text{Amortized degradation cost} = \text{Average degradation cost rate x Time between} $$
$$\text{maintenance operations} \qquad (1)$$

where the amortized degradation cost is expressed in dollars, the average degradation cost rate is expressed in dollars per hour, and the time between washes is expressed in hours. The time between washes may include the operating time (in hours) of the gas turbine system 10.

The degradation cost rate may be derived from an empirical fit to historical degradation cost data. For example, the degradation rate (e.g., an instantaneous degradation rate) may be determined by analyzing power production (e.g., in megawatts) and/or heat rate (e.g., in British thermal units per kilowatt-hour) data (e.g., loss data) over time. The following equations may convert the degradation rate in terms of cost:

$$\text{Instantaneous degradation cost rate} = \text{Instant profit rate}_{time=t} - \text{Instant profit rate}_{time=0} \quad (2)$$

where the instantaneous degradation cost rate is expressed in dollars per hour, the instant profit rate at time t is expressed in dollars per hour, and the instant profit rate is expressed in dollars per hour. The following equation may determine the instant profit rate at time t:

$$\text{Instant profit rate}_{time=t} = \text{Power production}_{time=t} \text{ x Electricity price} - $$
$$\text{Power production}_{time=t} (3) \text{ x Heat Rate}_{time=t} \text{ x Fuel price} \quad (3)$$

where the power production at time t is expressed in megawatts, the electricity price is expressed in dollars per megawatt-hour, the heat rate at time t is expressed in British thermal units per megawatt-hour, and the fuel price at dollars per British thermal unit. The degradation cost function (e.g., the amortized degradation cost) may be determined by integrating the instantaneous degradation cost rate from time = 0 to time = t, and then dividing the result by time t.

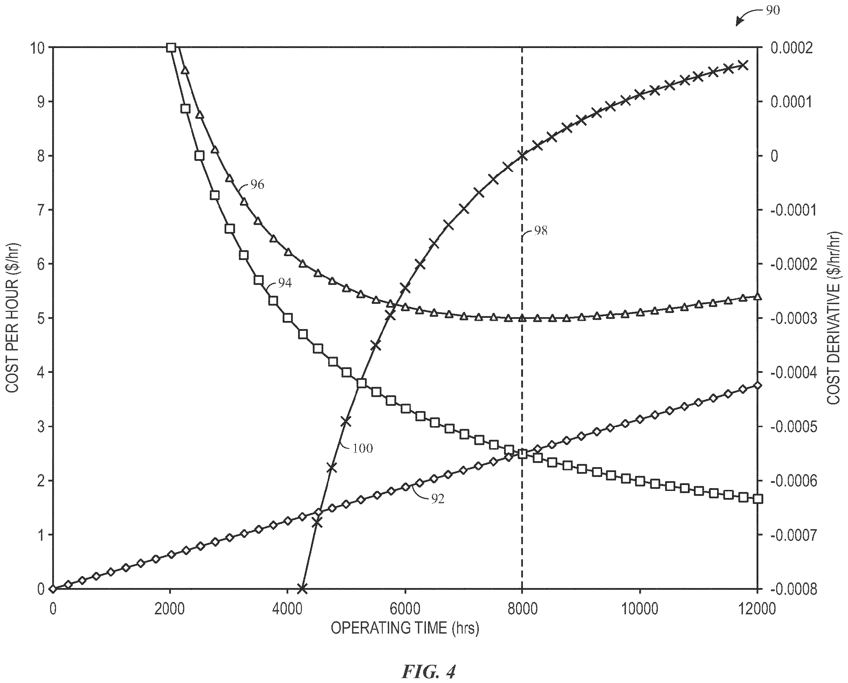

An example of the degradation cost function is illustrated in FIG. 4. Specifically, FIG. 4 is graph 90 of time averaged degradation and washing costs of the gas turbine system 10 of FIG. 1 over time between washes (e.g., over an operating time of the gas turbine system 10), in accordance with an embodiment of the present disclosure. A degradation cost curve 92 represents an example degradation cost function of the gas turbine system 10. As illustrated, the degradation cost curve 92 is expressed in dollars per hour. Before the gas turbine system 10 begins its operating life (i.e., at zero operating hours), the gas turbine system 10 has not degraded. As such, the degradation cost per hour is zero. As the gas turbine system 10 operates over time, the degradation cost curve 92 may increase (e.g., linearly). That is, the average degradation cost per hour of the gas turbine system 10 in operation may increase directly with increased operating time between washes.

Returning to FIG. 2, the controller 18 may also receive (process block 46) a washing cost of the gas turbine system 10. For example, the washing cost may be a cost of compressor water washing of the gas turbine system 10. The washing cost may be a fixed cost per maintenance event representing the financial cost of washing the gas turbine system 10. In some embodiments, the financial cost may include cost of the resources (e.g., liquids, equipment, and the like) used in the washing, labor costs, and the like. It should be noted that compressor water washing is only an example maintenance operation that may be evaluated by the method 40. Any suitable maintenance operation is contemplated by the present disclosure, including, but not limited to, compressor cleaning, turbine water washing, heat recovery steam generator washing, and the like. Similarly, the washing cost may be any suitable maintenance operation cost, including costs related to the above-listed examples, such as costs for replacement parts.

The controller 18 may then determine (process block 48) a washing cost function that quantifies the washing cost of the gas turbine system 10 in relation to the operating time of the gas turbine system 10 over the operating time of the gas turbine system 10 between washes. In particular, the washing cost may be a fixed cost at a time the compressor water washing is performed. The fixed washing cost may then be amortized over a time between a previous compressor water washing and a current compressor water washing. While the washing cost is fixed when the compressor water washing is performed, the washing cost may vary over time. Because the washing cost, over time, may be a function of lost opportunity, and the lost opportunity may be a function of market electricity and fuel prices, both of which may vary over time, the washing cost may also vary over time.

For example, the longer the gas turbine system 10 operates between washes, the more production is realized by operating the gas turbine system 10, thus decreasing the relative washing cost. As such, the controller 18 may divide the washing cost by a total operating time of the gas turbine system between washes.

The following is an example of the washing cost function (e.g., an amortized wash cost):

$$\text{Amortized wash cost} = \text{Washing cost} / \text{Time between washes} \qquad (4)$$

where the amortized wash cost is expressed in dollars per hour, the washing cost is expressed in dollars, and the time between washes is expressed in hours.

FIG. 4 also illustrates a washing cost curve 94 that represents the washing cost function of the gas turbine system 10. As illustrated, the washing cost curve 94 is expressed in dollars per hour. As the gas turbine system 10 operates over time, the washing cost curve 94 decreases hyperbolically. That is, the washing cost per hour of operation of the gas turbine system 10 in operation decreases (e.g., hyperbolically) with operating time.

Returning to FIG. 2, the controller 18 may determine (process block 50) a total cost function of the gas turbine system 10 over time based on the degradation cost function and the washing cost function. For example, the controller 18 may add the degradation cost function to the washing cost function to realize the total cost function.

FIG. 4 illustrates a total cost curve 96 that represents the total cost function of the gas turbine system 10. As illustrated, the total cost curve 96 is expressed in dollars per hour. As the gas turbine system 10 operates over time, the total cost curve 96 decreases to a minimum, then increases after the minimum. That is, the total cost (i.e., the degradation cost per hour and the washing cost per hour) per hour of the gas turbine system 10 in operation decreases to a minimum, then increases after the minimum, with operating time.

Returning to FIG. 2, the controller 18 may determine (process block 52) one or more times to perform a washing operation of the gas turbine system 10 based on the total cost function. That is, the controller 18 may determine one or more times to perform the washing operation based on the total cost function to reduce the total cost (e.g., among the degradation cost and the washing cost) associated with operating the gas turbine system 10. In one embodiment, the controller 18 may identify a time at which the total cost function is at a minimum total cost per hour.

As illustrated in FIG. 4, a time 98 at which the total cost function is at a minimum is approximately at 8000 operating hours. Because the degradation cost curve 92 increases (linearly) while the washing cost curve 94 decreases (hyperbolically) over time, the time 98 may correspond to a time that the degradation cost curve 92 and the washing cost curve 94 intersect. In some embodiments, the controller 18 may determine the time 98 by determining a derivative of a total cost function (e.g., the total cost function derivative). For example, the total cost function derivative may be realized by dividing the total cost function by time. In the graph 90, the total cost function derivative curve 100 represents a derivative of the total cost curve 96. The controller 18 may determine the time 98 by identifying the operating time at which the total cost function derivative curve 100 is at zero (e.g., in dollars per hour per hour). When the total cost function derivative is at zero, the operating time of the total cost function derivative curve 100 is approximately 8000 operating hours. In some embodiments, the controller 18 may determine a range of times that includes that includes the time when maintenance should be performed (e.g., the time 98).

Returning to FIG. 2, the controller 18 may schedule (process block 54) a washing operation of the gas turbine system 10 at the one or more times (including the time 98). In some embodiments, the controller 18 may send an alert to an operator of the gas turbine system 10 that washing or other maintenance operations may be efficiently performed at the one or more times. In additional embodiments, the controller 18 may perform or send an instruction to perform the maintenance operation using automated procedures at the one or more times. For example, the controller 18 may automatically perform washing or other maintenance operations of the gas turbine system 10 at the time 98.

Technical effects of the subject matter disclosed herein include, but are not limited to, scheduling maintenance operations of a gas turbine system 10 to reduce degradation of the gas turbine system 10. In particular, a controller 18 of the gas turbine system 10 may determine a degradation cost function that quantifies a degradation cost of the gas turbine system 10. The controller 18 may also determine a maintenance operation cost function that quantifies the maintenance operation cost of the gas turbine system 10 based on a total operating time of the gas turbine system 10 over time. The controller 18 may then determine a total cost function of the gas turbine system 10 over time based on the degradation cost function and the maintenance operation cost function. The controller 18 may then schedule a maintenance operation of the gas turbine system 10 based on the total cost function. In this manner, costs from operating a degraded gas turbine system 10 may be balanced with costs of performing the maintenance operation that reduces degradation of the gas turbine system 10, reducing a total cost to an operator of the gas turbine system 10.

This written description uses examples to describe the present embodiments, including the best mode, and also to enable any person skilled in the art to practice the presently disclosed embodiments, including making and using any devices or systems and performing any incorporated methods. The patentable scope of the presently disclosed embodiments is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following clauses:

1. A system, comprising:

a power generation system; and

one or more controllers configured to control the power generation system, comprising one or more processors, wherein the one or more processors are configured to:

receive a plurality of values associated with one or more operating parameters of the power generation system from one or more sensors disposed within the power generation system;

determine a degradation cost function that quantifies a degradation cost of the power generation system over an operating time of the power generation system based on the plurality of values;

receive an operation cost of the power generation system, wherein the operation cost comprises a fixed financial cost of performing an operation on the power generation system;

determine an operation cost function that quantifies the operation cost in relation to the operating time of the power generation system;

determine a total cost function of the power generation system over the operating time of the power generation system based on the degradation cost function and the operation cost function;

determine one or more times to perform the operation on the power generation system based on the total cost function; and

send an alert to perform the operation of the power generation system at the one or more times.

2. The system of clause 1, wherein the operation cost comprises a maintenance operation cost of the power generation system, wherein the operation comprises a maintenance operation on the power generation system.

3. The system of clause 1, wherein the one or more processors are configured to determine the degradation cost function by:

modeling the one or more operating parameters of the power generation system over the operating time of the power generation system to generate a plurality of values associated with one or more modeled operating parameters; and

generating a plurality of adjustments based on differences between each value of the plurality of values associated with the one or more modeled operating parameters and each value of the plurality of values associated with the one or more operating parameters.

4. The system of clause 3, wherein the one or more processors are configured to determine the degradation cost function by determining a degradation function of the power generation system based on the plurality of adjustments.

5. The system of clause 4, wherein the one or more processors are configured to determine total cost of the power generation system at one or more future times based on the total cost function and determine one or more times to perform the operation based on the total cost of the power generation system at the one or more future times.

6. The system of clause 1, wherein the one or more operating parameters comprise compressor inlet airflow, fuel flow, rotational speed, generator or power output, exhaust temperature, compressor condition, or any combination thereof.

7. The system of clause 1, wherein the power generation system comprises a gas turbine system, a steam turbine system, a wind turbine system, a hydroturbine system, a combustion engine, a hydraulic engine, or an electric generator.

8. The system of clause 1, wherein the operation comprises compressor water washing, turbine water washing, heat recovery steam generator washing, or any combination thereof.

9. The system of clause 1, wherein the operation cost comprises resource or material costs, labor costs, lost opportunity costs, or any combination thereof.

10. A method, comprising:

receiving, via one or more processors, a plurality of values associated with one or more operating parameters of a power generation system from one or more sensors disposed within the power generation system;

determining, via the one or more processors, a degradation cost function that quantifies a degradation cost of the power generation system over an operating time of the power generation system based on the plurality of values;

receiving, via the one or more processors, an operation cost of the power generation system, wherein the operation cost comprises a fixed financial cost of performing an operation on the power generation system;

determining, via the one or more processors, an operation cost function that quantifies the operation cost in relation to the operating time of the power generation system;

determining, via the one or more processors, a total cost function of the power generation system over the operating time of the power generation system based on the degradation cost function and the operation cost function;

determining, via the one or more processors, one or more times to perform the operation on the power generation system based on the total cost function; and

scheduling, via the one or more processors, the operation of the power generation system at the one or more times.

11. The method of clause 10, wherein determining, via the one or more processors, the degradation cost function comprises determining, via the one or more processors, degradation of the power generation system over the operating time of the power generation system.

12. The method of clause 11, wherein determining, via the one or more processors, the degradation cost function comprises dividing, via the one or more processors, a degradation function representing the degradation of the power generation system by the operating time of the power generation system.

13. The method of clause 10, wherein determining, via the one or more processors, the total cost function comprises adding, via the one or more processors, the degradation cost function to the operation cost function.

14. The method of clause 10, wherein scheduling, via the one or more processors, the operation comprises determining, via the one or more processors, one or more times to perform the operation based on the total cost function.

15. The method of clause 14, wherein the one or more times includes an operating time of the power generation system at which the total cost function is at a minimum.

16. The method of clause 14, determining, via the one or more processors, the one or more times to perform the operation comprises determining, via the one or more processors, a time at which a derivative of the total cost function is at zero.

17. A tangible, non-transitory, machine-readable-medium, comprising machine-readable instructions to cause one or more processors to:

receive a plurality of values associated with one or more operating parameters associated with a power generation system from one or more sensors disposed within the power generation system;

determine a degradation cost function that quantifies a degradation cost of the power generation system over an operating time of the power generation system based on the plurality of values;

receive an operation cost of the power generation system, wherein the operation cost comprises a fixed financial cost of performing an operation on the power generation system;

determine an operation cost function that quantifies the operation cost in relation to the operating time of the power generation system over the operating time of the power generation system;

determine a total cost function of the power generation system over the operating time of the power generation system based on the degradation cost function and the operation cost function;

determine one or more times to perform the operation on the power generation system based on the total cost function; and

send an instruction to perform the operation of the power generation system at the one or more times.

18. The machine-readable-medium of clause 17, wherein the machine-readable instructions cause the one or more processors to determine the degradation cost function by determining degradation of the power generation system over the operating time of the power generation system.

19. The machine-readable-medium of clause 18, wherein the machine-readable instructions cause the one or more processors to determine the degradation cost function by dividing a degradation function representing the degradation of the power generation system by the operating time of the power generation system.

20. The machine-readable-medium of clause 17, wherein the machine-readable instructions cause the one or more processors to determine the operation cost function by dividing the operation cost by the operating time of the power generation system.

**Claims**

1. A system, comprising:

a power generation system (10); and
one or more controllers (18) configured to control the power generation system (10), comprising one or more processors (19), wherein the one or more processors (19) are configured to:

receive a plurality of values associated with one or more operating parameters (72) of the power generation system (10) from one or more sensors (28) disposed within the power generation system (10);
determine a degradation cost function (92) that quantifies a degradation cost of the power generation system (10) over an operating time (98) of the power generation system (10) based on the plurality of values;
receive an operation cost of the power generation system (10), wherein the operation cost comprises a fixed financial cost of performing an operation on the power generation system (10);
determine an operation cost function that quantifies the operation cost in relation to the operating time (98) of the power generation system (10);
determine a total cost function of the power generation system (10) over the operating time (98) of the power generation system (10) based on the degradation cost function (92) and the operation cost function;
determine one or more times (98) to perform the operation on the power generation system (10) based on the total cost function; and
send an alert to perform the operation of the power generation system (10) at the one or more times (98).

2. The system of claim 1, wherein the operation cost comprises a maintenance operation cost of the power generation system (10), wherein the operation comprises a maintenance operation on the power generation system (10).

3. The system of claim 1, wherein the one or more processors (19) are configured to determine the degradation cost function (92) by:

modeling the one or more operating parameters (72) of the power generation system (10) over the operating time (98) of the power generation system (10) to generate a plurality of values associated with one or more modeled operating parameters (74); and
generating a plurality of adjustments (78) based on differences between each value of the plurality of values associated with the one or more modeled operating parameters (74) and each value of the plurality of values associated with the one or more operating parameters (72).

4. The system of claim 3, wherein the one or more processors (19) are configured to determine the degradation cost function (92) by determining a degradation function of the power generation system (10) based on the plurality of adjustments (78).

5. The system of claim 1, wherein the one or more operating parameters (72) comprise compressor inlet airflow, fuel flow, rotational speed, generator or power output, exhaust temperature, compressor condition, or any combination thereof.

6. The system of claim 1, wherein the power generation system (10) comprises a gas turbine system, a steam turbine system, a wind turbine system, a hydroturbine system, a combustion engine, a hydraulic engine, or an electric generator.

7. A method (40), comprising:

receiving (42), via one or more processors (19), a plurality of values associated with one or more operating parameters (72) of a power generation system (10) from one or more sensors (28) disposed within the power generation system (10);
determining (44), via the one or more processors (19), a degradation cost function (92) that quantifies a degradation cost of the power generation system (10) over an operating time (98) of the power generation system (10) based on the plurality of values;
receiving (46), via the one or more processors (19), an operation cost of the power generation system (10), wherein the operation cost comprises a fixed financial cost of performing an operation on the power generation system (10);
determining (48), via the one or more processors (19), an operation cost function that quantifies the operation cost in relation to the operating time (98) of the power generation system (10);
determining (50), via the one or more processors (19), a total cost function of the power generation system (10) over the operating time (98) of the power generation system (10) based on the degradation cost function (92) and the operation cost function;
determining (52), via the one or more processors (19), one or more times (98) to perform the operation on the power generation system (10) based on the total cost function; and
scheduling (54), via the one or more processors (19), the operation of the power generation system (10) at the one or more times (98).

8. The method (40) of claim 7, wherein determining (44), via the one or more processors (19), the degradation cost function (92) comprises determining (44), via the one or more processors (19), degradation of the power generation system (10) over the operating time (98) of the power generation system (10).

9. The method (40) of claim 8, wherein determining, via the one or more processors (19), the degradation cost function

EP 3 373 233 A1

(92) comprises dividing, via the one or more processors (19), a degradation function representing the degradation of the power generation system (10) by the operating time (98) of the power generation system (10).

10. The method (40) of claim 7, wherein determining (50), via the one or more processors (19), the total cost function comprises adding, via the one or more processors (19), the degradation cost function (92) to the operation cost function.

11. The method of claim 7, wherein scheduling (54), via the one or more processors (19), the operation comprises determining (52), via the one or more processors (19), one or more times (98) to perform the operation based on the total cost function.

12. A tangible, non-transitory, machine-readable-medium (20), comprising machine-readable instructions to cause one or more processors (19) to:

receive (42) a plurality of values associated with one or more operating parameters (72) associated with a power generation system (10) from one or more sensors (28) disposed within the power generation system (10);
determine (44) a degradation cost function (92) that quantifies a degradation cost of the power generation system (10) over an operating time (98) of the power generation system (10) based on the plurality of values;
receive (46) an operation cost of the power generation system (10), wherein the operation cost comprises a fixed financial cost of performing an operation on the power generation system (10);
determine (48) an operation cost function that quantifies the operation cost in relation to the operating time (98) of the power generation system (10) over the operating time (98) of the power generation system (10);
determine (50) a total cost function of the power generation system (10) over the operating time (98) of the power generation system (10) based on the degradation cost function (92) and the operation cost function;
determine (52) one or more times (98) to perform the operation on the power generation system (10) based on the total cost function; and
send an instruction to perform the operation of the power generation system (10) at the one or more times (98).

13. The machine-readable-medium (20) of claim 12, wherein the machine-readable instructions cause the one or more processors (19) to determine the degradation cost function (92) by determining degradation of the power generation system (10) over the operating time (98) of the power generation system (10).

14. The machine-readable-medium (20) of claim 13, wherein the machine-readable instructions cause the one or more processors (19) to determine the degradation cost function (92) by dividing a degradation function representing the degradation of the power generation system (10) by the operating time (98) of the power generation system (10).

15. The machine-readable-medium of claim 12, wherein the machine-readable instructions cause the one or more processors (19) to determine the operation cost function by dividing the operation cost by the operating time (98) of the power generation system (10).

*FIG. 1*

EP 3 373 233 A1

40

| RECEIVE VALUES ASSOCIATED WITH ONE OR MORE OPERATING PARAMETERS OF A GAS TURBINE SYSTEM | 42 |

↓

| DETERMINE A DEGRADATION COST FUNCTION THAT QUANTIFIES A DEGRADATION COST OF THE GAS TURBINE SYSTEM OVER AN OPERATING TIME OF THE GAS TURBINE SYSTEM BASED ON THE VALUES | 44 |

↓

| RECEIVE A WASHING COST OF THE GAS TURBINE SYSTEM | 46 |

↓

| DETERMINE A WASHING COST FUNCTION THAT QUANTIFIES THE WASHING COST IN RELATION TO THE OPERATING TIME OF THE GAS TURBINE SYSTEM OVER THE OPERATING TIME OF THE GAS TURBINE SYSTEM | 48 |

↓

| DETERMINE A TOTAL COST FUNCTION OF THE GAS TURBINE SYSTEM OVER THE OPERATING TIME OF THE GAS TURBINE SYSTEM BASED ON THE DEGRADATION COST FUNCTION AND THE WASHING COST FUNCTION | 50 |

↓

| DETERMINE ONE OR MORE TIMES TO PERFORM A WASHING OPERATION OF THE GAS TURBINE SYSTEM BASED ON THE TOTAL COST FUNCTION | 52 |

↓

| SCHEDULE THE WASHING OPERATION OF THE GAS TURBINE SYSTEM AT THE ONE OR MORE TIMES | 54 |

*FIG. 2*

*FIG. 3*

EP 3 373 233 A1

*FIG. 4*

Europäisches
Patentamt

European
Patent Office

Office européen
des brevets

## EUROPEAN SEARCH REPORT

Application Number

EP 18 15 7023

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/120412 A1 (HAYASHI YOSHIHARU [JP] ET AL) 29 August 2002 (2002-08-29)<br>* figures 1-3 *<br>* figures 7-9 *<br>* paragraph [0045] - paragraph [0051] *<br>* paragraph [0067] - paragraph [0094] *<br>----- | 1-15 | INV.<br>G06Q50/06<br>G06Q10/00<br><br>ADD.<br>F01K13/00<br>F02C6/18 |
| X | EP 1 353 284 A2 (TOSHIBA KK [JP]) 15 October 2003 (2003-10-15)<br>* figure 1 *<br>* paragraph [0069] - paragraph [0073] *<br>----- | 1,2,6,7, 9-15 | F01K23/10<br>F03D80/50 |
| A | EP 1 353 283 A2 (TOSHIBA KK [JP]) 15 October 2003 (2003-10-15)<br>* abstract *<br>----- | 1-15 | |
| A | YILDIRIM MURAT ET AL: "Sensor-Driven Condition-Based Generator Maintenance Scheduling-Part I: Maintenance Problem", IEEE TRANSACTIONS ON POWER SYSTEMS, IEEE SERVICE CENTER, PISCATAWAY, NJ, US, vol. 31, no. 6, 1 November 2016 (2016-11-01), pages 4253-4262, XP011626152, ISSN: 0885-8950, DOI: 10.1109/TPWRS.2015.2506600 [retrieved on 2016-10-18]<br>* abstract *<br>----- | 1-15 | |

TECHNICAL FIELDS
SEARCHED       (IPC)

G06Q
F01K
F02C
F03D

-/--

The present search report has been drawn up for all claims

| Place of search | Date of completion of the search | Examiner |
|---|---|---|
| Munich | 19 July 2018 | Chabas, Julien |

EPO FORM 1503 03.82 (P04C01)

page 1 of 2

Europäisches
Patentamt

European
Patent Office

Office européen
des brevets

**EUROPEAN SEARCH REPORT**

Application Number

EP 18 15 7023

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YILDIRIM MURAT ET AL: "Sensor-Driven Condition-Based Generator Maintenance Scheduling-Part II: Incorporating Operations", IEEE TRANSACTIONS ON POWER SYSTEMS, IEEE SERVICE CENTER, PISCATAWAY, NJ, US, vol. 31, no. 6, 1 November 2016 (2016-11-01), pages 4263-4271, XP011626154, ISSN: 0885-8950, DOI: 10.1109/TPWRS.2015.2506604 [retrieved on 2016-10-18] * abstract * | 1-15 | |

-----

TECHNICAL FIELDS
SEARCHED (IPC)

The present search report has been drawn up for all claims

| Place of search | Date of completion of the search | Examiner |
|---|---|---|
| Munich | 19 July 2018 | Chabas, Julien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

**ANNEX TO THE EUROPEAN SEARCH REPORT
ON EUROPEAN PATENT APPLICATION NO.**

EP 18 15 7023

This annex lists the patent family members relating to the patent documents cited in the above-mentioned European search report.
The members are as contained in the European Patent Office EDP file on
The European Patent Office is in no way liable for these particulars which are merely given for the purpose of information.

19-07-2018

| Patent document cited in search report | | | Publication date | Patent family member(s) | | | Publication date |
|---|---|---|---|---|---|---|---|
| US 2002120412 | A1 | | 29-08-2002 | US | 2002120412 | A1 | 29-08-2002 |
| | | | | US | 2003004659 | A1 | 02-01-2003 |
| | | | | US | 2004148132 | A1 | 29-07-2004 |
| | | | | US | 2004181369 | A1 | 16-09-2004 |
| | | | | US | 2005246068 | A1 | 03-11-2005 |
| EP 1353284 | A2 | | 15-10-2003 | AU | 2003203598 | A1 | 23-10-2003 |
| | | | | EP | 1353284 | A2 | 15-10-2003 |
| | | | | JP | 4058289 | B2 | 05-03-2008 |
| | | | | JP | 2003303243 | A | 24-10-2003 |
| | | | | MX | PA03003044 | A | 24-05-2004 |
| | | | | US | 2003191606 | A1 | 09-10-2003 |
| EP 1353283 | A2 | | 15-10-2003 | AU | 2003203597 | A1 | 23-10-2003 |
| | | | | EP | 1353283 | A2 | 15-10-2003 |
| | | | | JP | 2003303014 | A | 24-10-2003 |
| | | | | MX | PA03003045 | A | 24-05-2004 |
| | | | | US | 2003191605 | A1 | 09-10-2003 |

EPO FORM P0459

For more details about this annex : see Official Journal of the European Patent Office, No. 12/82